# EUROPEAN PATENT SPECIFICATION

(11) **EP 2 116 003 B1**
(45) Date of publication and mention of the grant of the patent: **13.04.2011**
(21) Application number: 07726538.7
(22) Date of filing: 28.02.2007
(51) Int. Cl.: H04L 29/06

(54) **SUBSCRIBER DATA MANAGEMENT IN COMMUNICATION NETWORKS**
VERWALTUNG VON TEILNEHMERDATEN IN KOMMUNIKATIONSNETZWERKEN
GESTION DE DONNÉES D'ABONNÉ DANS DES RÉSEAUX DE COMMUNICATION

(43) Date of publication of application: 11.11.2009
(73) Proprietor: Telefonaktiebolaget LM Ericsson (publ), 164 83 Stockholm (SE)
(72) Inventor: KELLER, Ralf, 52146 Würselen (DE); WITZEL, Andreas, 52134 Herzogenrath (DE); FOTI, George, Quebec H9G 2Z8 (CA); NOLDUS, Rogier, NL-5052 BM Goirle (NL)
(74) Representative: von Zmuda-Trzebiatowski, Margarethe
(86) International application number: PCT/EP2007/051902
(87) International publication number: WO 2008/104225

(56) References cited:
- WO-A-2006/127417
- US-A1- 2006 258 394

## Description

### Field of the Invention

The invention relates to the field of subscriber data management in communications networks.

### Background to the Invention

IP Multimedia services provide a dynamic combination of voice, video, messaging, data, etc. within the same session. By growing the number of basic applications and the media that it is possible to combine, the number of services offered to the end users will grow, and the inter-personal communication experience will be enriched. This will lead to a new generation of personalised, rich multimedia communication services.

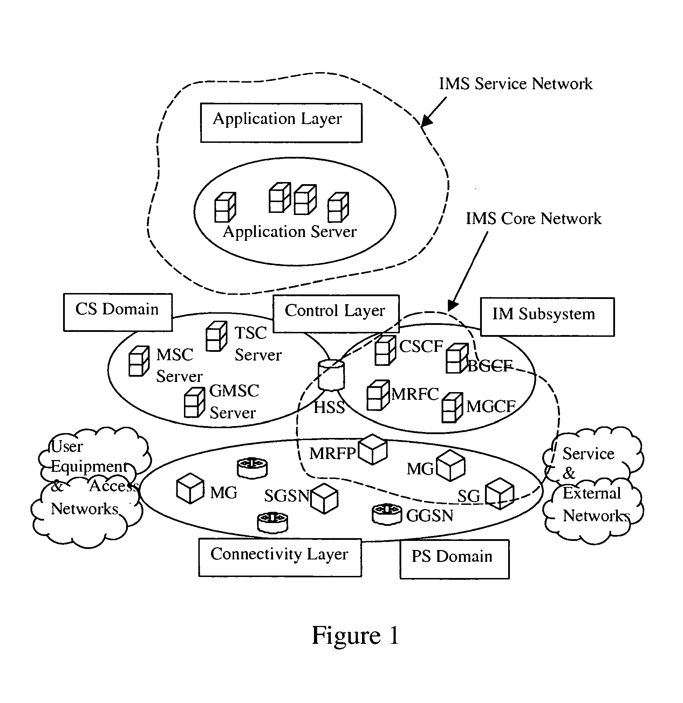

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The integration of an IP Multimedia Subsystem into a 3G mobile communications system is illustrated schematically in Figure 1.

IMS relies on Internet Protocol (IP) as a transport technology. Using IP for voice communications, however, presents some challenges, especially in the mobile community where Voice Over IP (VoIP) enabled packet switched (PS) bearers may not always be available. To allow operators to start offering IMS-based services while voice enabled PS-bearers are being built out, the industry has developed solutions that use existing Circuit Switched (CS) networks to access IMS services. These solutions are referred to as IMS Centralized Services (ICS). ICS is also the name of the Work Item in 3GPP Release 8 addressing these matters.

### Supplementary Services in GSM/UMTS

Global System for Mobile Communications (GSM)/Universal Mobile Telecommunications System (UMTS) allows subscribers to apply supplementary services to basic services. An example of a supplementary service (SS) is the Call Forwarding SS. The Call Forwarding SS is a service for forwarding all incoming calls, for example to a voice mail system. In this example, Call Forwarding is the supplementary service and telephony is an example of a basic service. Basic Services are grouped into tele-services and bearer services, and telephony is one of the GSM defined tele-services. Of course, Supplementary Services can be used for many different operations.

In GSM networks, Supplementary Services are handled either by a Home Location Register (HLR) or by a Mobile-services Switching Centre (MSC) / Visitor Location register (VLR). An example of a service handled by the MSCNLR is Call Forwarding On Busy. For these services, the HLR updates the MSCNLR with the new data with an Insert Subscriber Data procedure.

Generic signalling principles for supplementary services are described in 3GPP TS 24.010. Signalling for individual supplementary services is described in the specifications 3GPP TS 24.072- 24.093.

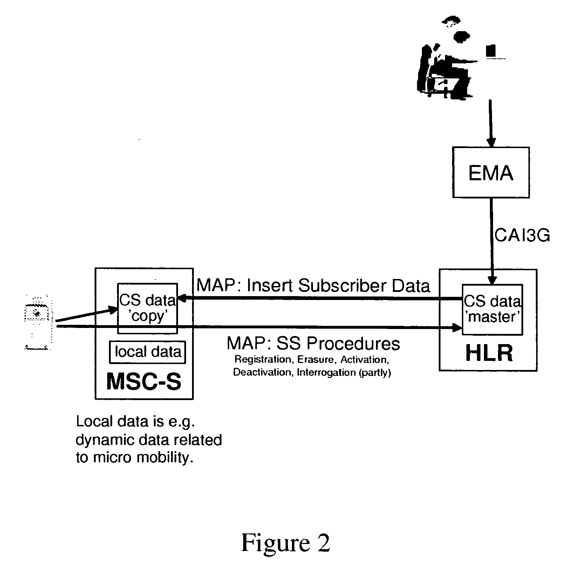

Figure 2 illustrates data management of a user registered to a CS network. A user using a mobile user terminal connects to an MSC/VLR. The MSC/VLR contacts the user's HLR, which holds the user's master subscription data, which may include GSM supplementary service settings. The HLR sends the subscription data to the MSC/VLR using a Mobile Application Part (MAP) Insert Subscriber Data (ISD). If the user wishes to modify their subscription data, for example to activate call forwarding, the MSC sends a MAP SS message to the HLR which updates the subscription data in the user's record.

Where an operator connects via a terminal, they may connect to the HLR via a services provisioning node, for example Ericsson Multi Activation (EMA), which communicates with the HLR using Computer Administration Interface for 3G Network (CAI3G) to update subscription data.

### IMS "Supplementary Services"

IMS multimedia telephony offers a number of standardized "supplementary services" (or service settings), many of which are similar to the GSM/UMTS supplementary services. The IMS supplementary services have extended capabilities for setting data that govern their execution, for example to define criteria for the execution of the "session forwarding" that is dependent on the caller, what media the session is intended for, etc. Subscription data in the IMS network is stored in the Home Subscriber Register (HSR) of a Home Subscriber Server (HSS). The HSR stores both IMS network subscription data, which is deemed to be non-transparent because the HSS understands the meaning of the data, and IMS service data, which is deemed to be transparent because the HSS does not understand the meaning of the data.

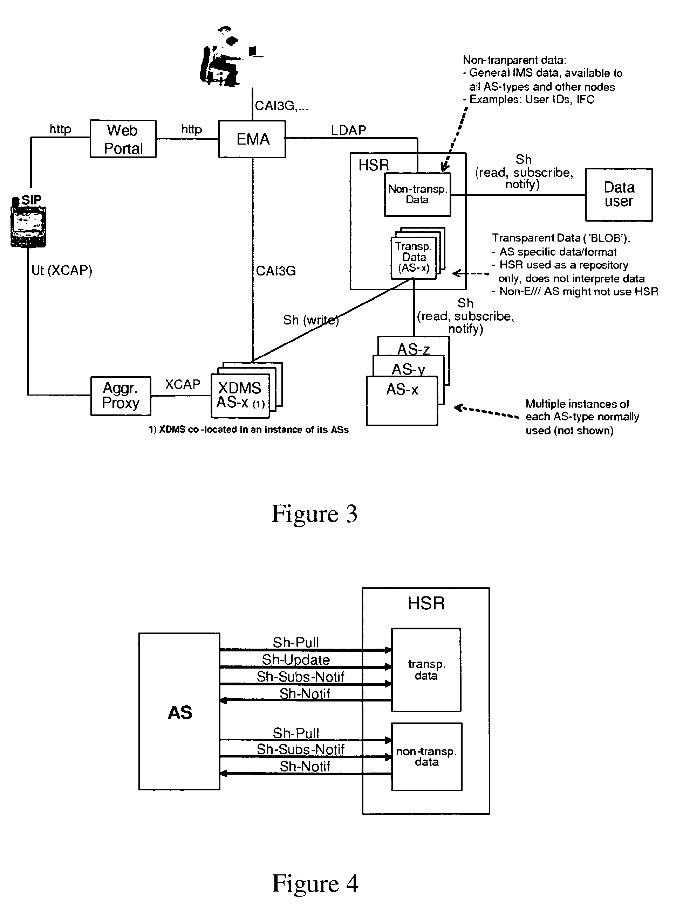

Service data management for a user in an IP Multimedia Subsystem network is illustrated in Figure 3. When a user having a SIP-capable mobile user terminal wishes to update their service data, they may use the Ut interface to access, via an aggregation proxy, an XML Document Management Server (XDMS) using Extensible Markup Language Configuration Application Protocol (XCAP). The XDMS uses the Sh interface to send the instruction to the HSR of the user's HSS. The format of the data elements carried over the Ut interface is application server-specific, and so the XDMS is capable of mapping the instruction received from the user terminal to an instruction that will be understood by the HSR. The HSR, which receives the subscriber data update instructions from the XDMS, serves as a repository for the subscriber data.

Alternatively, the SIP-capable user terminal may use a generic http-based browsing method to access a web portal in order to change their service data. The web portal offers the user a menu of options, which can be selected by the user to change their service data (transparent data). Once the user has updated his or her service settings, the web portal sends an instruction using CAI3G to the XDMS to update the subscriber's service data, and/or by Lightweight Database Access Protocol (LDAP) update general IMS settings at the HSS.

When the HSS has received updated subscriber service data, it may distribute the data to other SIP Application Servers that have previously subscribed to subscriber service data changes. Figure 4 illustrates the signalling for updating an Application Server (AS) from the HSS. Note that it is not mandatory for an AS to use the HSS for storage of transparent data, in which case the service data is updated directly in the AS.

The Sh messages (Sh-Pull, Sh-Update etc.) are DIAMETER based (specified in IETF RFC 3588). Sh-Pull (User-Data-Request, UDR) is used by an AS to obtain transparent and/or non-transparent data for a specified user from the HSS. Sh-Update (Profile-Update-Request, PUR) is used by an AS to update transparent (repository) data stored at the HSS for a specified user. This procedure cannot be used by an AS to update non-transparent data in HSS. Sh-Subs-Notif (Subscribe-Notifcations-Request, SNR) is used by an AS to subscribe to notifications for when particular transparent and/or non-transparent data for a specified user has changed in the HSS. Sh-Notif (Push-Notification-Request, PNR) is used by an HSS to inform the AS of changes in transparent and/or non-transparent data in the case where the AS had previously subscribed to receive Notifications of any changes, using Sh-Subs-Notif.

There are many similarities between the supplementary services in GSM/UMTS and IMS networks. Table 1 below compares subscriber data in GMS/UMTS and IMS networks.

**Table 1**

| GSM | IMS |
|---|---|
| *Basic Services* subscription data - this data is needed for basic telephony and data services, such as voice call and data call. | IMS network subscription data - The IMS network subscription data is used for, amongst others, managing IMS network connection and service invocation. |
| *Supplementary Services* subscription data - this data is needed for services as call forwarding, call transfer etc. | This data is known as *non-transparent data.* |
| *Value Added Services* subscription data - this data is needed for IN services, e.g. for pre-paid, VPN etc. | IMS service data - this data is used in an IMS application server and is specific to IMS service(s) in that IMS application server. |
| *Network* subscription data - this data relates to operator-defined services such as operator determined barring (ODB). | This data is known as *transparent data.* When this data is stored in HSS, the HSS has no knowledge of the content/meaning of the data. |

Even though there are many similarities between the supplementary services in GSM/UMTS and IMS networks, the procedures for operating on the SS-data are totally different. This becomes inconvenient when a subscriber using a CS access network wishes to use IMS services. IMS Centralized Service (ICS) enables services to be provided to users independent of the access that they are currently using. A subscriber may at a certain time only have a CS access available, and can then not perform any manipulations of supplementary services with XCAP, since XCAP signalling requires PS access. Furthermore, there is no support for "legacy terminals" that are not IMS capable but are equipped only with GSM/UMTS SS-Operations and cannot use the XCAP procedures defined for IMS.

Under the IMS Centralized Services concept, all services are central in the IMS network, even when a CS access network is being used by a subscriber. It is therefore desirable to control the required CS service settings (basic services, supplementary services) from the IMS network. A mechanism is required by means of which the IMS subscriber can manage his or her supplementary service data from her user terminal, despite the fact that the supplementary service data settings reside in the IMS network, but some service settings may need to be done in the CS network. One example of a service that is done in the CS network is operator determined barring (ODB).

Furthermore, it is desirable to control from the IMS domain whether or not a CS call should be routed to IMS for anchoring ("dynamic anchoring"). If it is decided that calls should not be routed to the IMS network (e.g. because the subscriber is roaming in a visited network), then subscriber data (e.g. O-CSI and T-CSI if CAMEL is used as routing solution) should not be provisioned in the HLR of the CS network, in order to prevent call routing to the IMS network. In addition, some other basic CS service settings may not need to be provisioned in the HLR. For example, call forwarding settings to a voice mailbox may not be needed if the call is to be routed to the IMS network.

Currently, service data in CS domain is managed as shown in Figure 2 and described above. However, where a user is accessing an IMS network via a CS access network, service settings must be provisioned in both the CS access network and the IMS network. The service definitions in CS and IMS networks can differ greatly for some supplementary services. For example, call forwarding in a CS network uses an ISDN number as a forwarded-to address, whereas call forwarding in an IMS network uses a rule.

Some attempts have been made to allow provisioning of subscriber data in a CS network controlled by an IMS network, but all have problems. For example, a simple mapping of CS and IMS supplementary services could not directly map all the services, as some have no equivalent in both a CS and an IMS network. Another approach attempts to update subscriber services from a user terminal via an HLR to the HSS. However, this approach has limitations because some subscriber data (in particular, IMS service data) is transparent in the HSS, and so the HSS cannot directly use this data.

US 2006/0258394 describes encapsulation of supplementary service messages in an SMS message, which requires SMS messaging modules to be involved in an exchange of data. WO 2006/127417 describes a system to provide dual registration with an IP network and a CS network, but does not provide a way of provisioning subscriber data in a CS network controlled by an IMS network.

### Summary

The invention provides subscriber data management from an IMS network using an IMS Application Server where a user is accessing the IMS network via a Circuit Switched access network. This allows both transparent and non-transparent subscriber data to be managed in the IMS network. Some service data may need to be present in the CS network. For example, tele service 11 (TS11 = speech) must be provisioned in the CS network to enable speech service.

The subscriber's non-transparent supplementary service data resides in the IMS domain and is manipulated in the IMS domain. Where necessary, some service data will be sent to the CS network, but all service data held in the CS network can be seen as "slave" data derived from the master service data held in the IMS domain. If the user or the operator modifies the IMS service data, any service data in CS domain will need to be modified as well if it is to be dealt with in the CS network.

According to a first aspect of the invention, there is provided a method of managing subscriber data in a communications network, the method comprising:
receiving, at an Application Server in an IP Multimedia Subsystem network, subscriber data sent from a Home Subscriber Server, the subscriber data including information identifying a Home Location Register in a Circuit Switched network and instructions for handing subscriber service data;
sending a message from the Application Server to the identified Home Location Register, the message comprising at least part of the instructions, and an address of the Application Server.

This allows an Application Server to control which subscriber data policies are to be handled in the IMS network, and which may be allowed to be handled in the CS network by the HLR.

In order for a user to update their subscriber data, the method may further comprise receiving, at the Application Server, subscriber data update information sent from a user, and updating subscriber data stored at the Application Server with the received subscriber update information. The subscriber update information may be sent from the user via a Ut or web interface. Furthermore, if the Application Server determines that as a result of the user updating their subscriber settings, the Home Location register needs to be informed of certain changes, then a message may be sent from the Application Server to the Home Location Register, the message comprising at least a part of the subscriber update information.

The instructions sent from the Application Server to the Home Location Register must be mapped in order that they may be understood by the Home Location Register. This mapping may be performed at any one of the Application Server, an intermediate node functionally located between the Application Server and the Home Location Register, and the Home Location Register itself.

Where a user is already registered with the Home Location Register, the method may further comprise, in response to receiving the message from the Application Server at the Home Location Register, sending an update message from the Home Location Register to a Mobile Switching Centre/Visitor Location Register, the update message updating instructions for handling subscriber data stored at the Mobile Switching Centre/Visitor Location Register.

In the case where a user subsequently registers with a Home Location Register, the method may comprise, after receiving at the Home Location Register the message from the Application Server:
receiving at the Home Location Register a Location Update message from a Mobile Switching Centre/Visitor Location Register; and
as part of the Location Update procedure, sending an update message from the Home Location Register to the Mobile Switching Centre/Visitor Location Register, the update message updating instructions for handling subscriber data stored at the Mobile Switching Centre/Visitor Location Register.

The information identifying the Home Location Register may be a Signaling System #7 address, or alternatively it may be derived from one of an International Mobile Subscriber Identity and a Mobile Station Integrated Services Digital Network

According to a second aspect of the invention, there is provided an IP Multimedia Subsystem Application Server, the Application Server comprising:
a receiver for receiving subscriber data from a Home Subscriber Server, the subscriber data including information identifying a Home Location Register in a Circuit Switched network and instructions for handing subscriber service data;
means for generating a message, the message comprising at least part of the instructions, and an address of the Application Server; and
a transmitter for sending the message to the identified Home Location Register.

### Brief Description of the Drawings

Figure 1 illustrates schematically the integration of an IP Multimedia Subsystem into a 3G mobile communications system;
Figure 2 illustrates schematically subscription data management for a user in a circuit Switched network;
Figure 3 illustrates schematically subscription data management for a user in an IP Multimedia Subsystem network;
Figure 4 illustrates schematically the signalling for updating an Application Server from the HSS;
Figure 5 illustrates schematically the hardware and signalling routes required according to an embodiment of the invention;
Figure 6 illustrates schematically an IMS Application Server according to an embodiment of the invention;
Figure 7 illustrates schematically a Home Location Register according to an embodiment of the invention; and
Figure 8 illustrates schematically a mapping node according to an embodiment of the invention.

### Detailed Description

In one embodiment of the invention, it is possible to, from the IMS domain, switch call routing to the IMS domain on or off. Where calls are not routed to IMS domain, different subscriber service data will need to be present in the CS domain (e.g. forwarding settings) than in the case that the calls are routed to IMS domain.

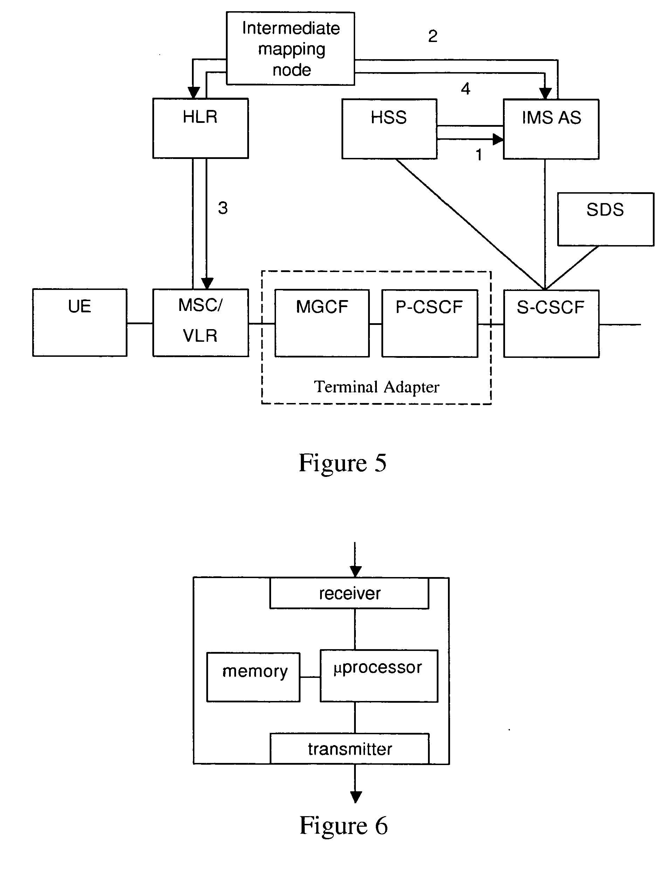

Referring to Figure 5, a user terminal (denoted as UE in Figure 5) connects to a CS access network via a MSCNLR. The MSC/VLR obtains subscriber data from the HLR. When the user connects to an IMS network, an IMS AS obtains subscriber service data from the HSR of the HSS in the IMS network and sends any necessary subscriber service data to the HLR, which may in turn send required subscriber data to the MSC/VLR.

Examples of service data that are provisioned in the IMS AS and can be sent to the HLR of the HSS include the following:
1. GSM basic service data (for example, teleservices such as TS 11 (speech), and bearer services such as BS30 (data or videotelephony));
2. GSM supplementary service data (for example, Call Barring, Explicit Call Transfer etc.);
3. GSM network data (for example, Operator Determined Barring etc.);
4. Value added service data (for example, Originating CAMEL Service Information, O-CSI, or Terminating CAMEL Service Information, T-CSI).

The user must first be provisioned and registered in the IMS network. The IMS AS performs then 3^{rd} party registration (not shown in Figure 5). As a result of the 3^{rd} party registration, the IMS AS may be aware that the user is accessing the network via a CS access network, and may be also aware if the user is registered in the home network or in another (non-home) network. The IMS AS can then control all subscriber data, including data that must or must not be provisioned in the CS network.

The following steps shown in Figure 5 are performed:
1. The IMS AS retrieves subscriber data and information identifying the subscriber's serving HLR from the HSR. The information identifying the HLR is required in order to provision the HLR with subscriber data. Note that the information identifying the HLR need not necessarily be a physical SS7 address of the HLR, but any information that allows the IMS AS to find the HLR will suffice. For example, an HLR is usually addressed by using Global Title Translation. A Signalling Transfer Point (STP) or Flexible Number Register (FNR) derives the HLR address from the IMSI or MSISDN. A flag is sufficient to indicate that this particular subscriber requires service data to be provisioned in the CS domain in addition to the IMS domain. Of course, the service data in the CS network may need to be updated according to the operator's policies.
2. The IMS AS sends a message to the HLR in the CS network. The message includes the address of the serving IMS AS in addition to the subscriber's current service settings. The service settings are mapped to a CS equivalent format that can be understood by the HLR. If, depending on the subscriber's current registration, the operator policy requires ODB to be activated for this subscriber, then ODB will be part of the service definition. The mapping of the CS data may be performed either at the IMS AS, or by an intermediate node (shown in Figure 5 as Intermediate mapping node) functionally residing between the IMS AS and the HLR.
3. The HLR executes the insert subscriber data (ISD) MAP procedure or Delete Subscriber Data (SDS) MAP procedure, or a combination of the two, towards the MSCNLR. If the subscriber is currently registered with a MSC/VLR, the HLR executes the MAP ISD or MAP DSD in immediate response to receiving the service data from the IMS AS. If the subscriber is not currently registered with a MSC/VLR, the HLR executes the MAP ISD as part of a Location Update procedure (when subscriber switches on her telephone) or Restore Data procedure (when MSC/VLR needs to restore subscriber data).
4. When the subscriber changes supplementary service data via CS procedures, any updates that change the service data in the HLR are forwarded to the serving IMS AS (the address of the currently serving IMS AS was provided to the HLR in step 2).

An IMS AS is illustrated in Figure 6. The AS has a receiver for receiving subscription data from an HSS, and a processor for generating the message sent in step 2 of Figure 5. The received subscriber data may be stored in a memory at the AS. The AS also comprises a transmitter for sending the message to the HLR.

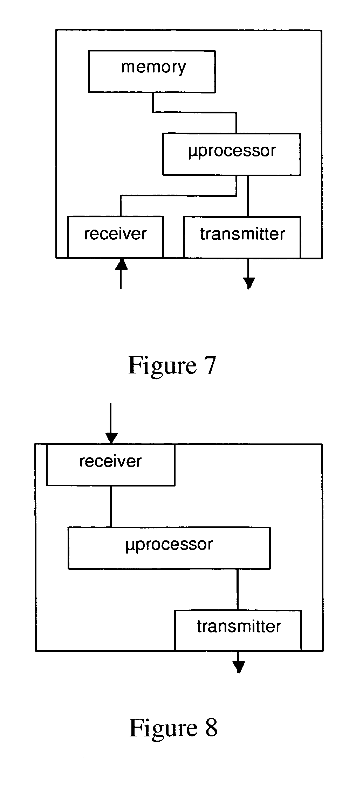

An HLR is illustrated in Figure 7. The HLR has a memory for storing existing policies relating to handling CS subscriber service data (note that these are the existing policies for the HLR to handle subscriber data in the CS network, and are distinct from the IMS policies handled by the IMS AS). It also has a receiver for receiving the message shown in step 2 of Figure 5, and a processor for updating the stored policies in the memory. The HLR also has a transmitter for communicating with the AS and with a MSC/VLR in the Circuit Switched network. In one embodiment, the HLR also has a processor for performing mapping of messages, such that messages sent by the AS can be understood by the HLR, and messages sent by the HLR can be understood by the AS.

A mapping node that may be functionally disposed between the HLR and the IMS AS is illustrated in Figure 8. The mapping node comprises a receiver for receiving messages from either the HLR or the IMS AS, and a transmitter for transmitting messages to the HLR or the AS. The mapping node further comprises a processor for

Using the invention, examples of policies that can be used by the IMS AS to send the subscriber data to the HLR include:
● When a subscriber registers in a Home Public Land Mobile Network (PLMN) to route all CS calls to the IMS network, only absolute the minimum service set is configured in the CS access network. The IMS-AS de-activates most of the GSM supplementary service settings in HLR.
● When a subscriber registers in a foreign PLMN belonging to the same operator group, voice calls are routed to the IMS network, but non-voice calls are handled locally in the GSM network. The IMS-AS de-activates most of the GSM supplementary service settings related to voice calls in the HLR, but activates the GSM supplementary service settings related to non-voice calls in the HLR.
● When a subscriber registers in a foreign PLMN not belonging to the same operator group, all calls are handled in the GSM network. The IMS-AS activates all GSM basic services and supplementary services in the HLR.
● When a subscriber registers in a foreign PLMN with which no service agreement exists, all calls shall be barred. The IMS-AS activates ODB (category Barring of All Outgoing Calls, BAOC) in the HLR, thereby blocking all calls from the subscriber already in the CS network and preventing wasting (transit) network resources.

The invention allows an Application Server in an IMS network to manage service data in both the IMS and the CS domain. Operators that maintain subscriber data only in the IMS network can still use the capabilities of the CS network for managing subscriber services. Where a subscriber accesses an IMS network using a CS access network, by mapping IMS service settings to their CS equivalents, and allowing the CS network to handle some aspects of subscriber data, the CS network can handle, for example, call barring. This reduces signalling required when a subscriber accesses an IMS network via a CS access network.

## Claims

1. A method of managing subscriber data in a communications network, the method comprising:
receiving, at an Application Server in an IP Multimedia Subsystem network, subscriber data sent (1) from a Home Subscriber Server, the subscriber data including information identifying a Home Location Register in a Circuit Switched network and instructions for handling subscriber service data;
sending (2) a message from the Application Server to the identified Home Location Register, the message comprising at least part of the instructions, and an address of the Application Server.

2. A method of managing subscriber data according to claim 1, further comprising:
receiving, at the Application Server, subscriber data update information sent from a user; and
updating subscriber data stored at the Application Server with the received subscriber update information.

3. A method of managing subscriber data according to claim 2, wherein the subscriber update information is sent from the user via a Ut or web interface.

4. A method of managing subscriber data according to claim 2 or 3, further comprising sending a message from the Application Server to the Home Location Register, the message comprising at least a part of the subscriber update information.

5. A method of managing subscriber data according to any one of the preceding claims, further comprising, prior to sending the message, mapping the instructions to be included in the message to the Home Location Register to instructions that can be understood by the Home Location Register.

6. A method of managing subscriber data according to any one of claims 1 to 4, further comprising sending the message via an intermediate node functionally located between the Application Server and the Home Location Register and, at the intermediate node, mapping the received subscriber data instructions to instructions that can be understood by the Home Location Register.

7. A method of managing subscriber data according to any one of claims 1 to 4, further comprising, at the Home Location Register, mapping the subscriber data instructions contained in the message to instructions that can be understood by the Home Location Register.

8. A method of managing subscriber data according to any one of the preceding claims, the method comprising, in response to receiving the message from the Application Server at the Home Location Register, sending an update message from the Home Location Register to a Mobile Switching Centre/Visitor Location Register, the update message updating instructions for handling subscriber data stored at the Mobile Switching Centre/Visitor Location Register.

9. A method of managing subscriber data according to any one of claims 1 to 7, the method comprising, after receiving at the Home Location Register the message from the Application Server:
receiving at the Home Location Register a Location Update message from a Mobile Switching Centre/Visitor Location Register; and
as part of the Location Update procedure, sending an update message from the Home Location Register to the Mobile Switching Centre/Visitor Location Register, the update message updating instructions for handling subscriber data stored at the Mobile Switching Centre/Visitor Location Register.

10. A method of managing subscriber data according to any one of the preceding claims, wherein the information identifying the Home Location Register is a Signaling System #7 address.

11. A method of managing subscriber data according to any one of claims 1 to 9, wherein the information identifying the Home Location Register is derived from one of an International Mobile Subscriber Identity and a Mobile Station Integrated Services Digital Network

12. An IP Multimedia Subsystem Application Server, the Application Server comprising:
a receiver for receiving subscriber data from a Home Subscriber Server, the subscriber data including information identifying a Home Location Register in a Circuit Switched network and instructions for handling subscriber service data;
means for generating a message, the message comprising at least part of the instructions, and an address of the Application Server; and
a transmitter for sending the message to the identified Home Location Register.

## Patentansprüche

1. Verfahren zur Verwaltung von Teilnehmerdaten in einem Kommunikationsnetz, wobei das Verfahren umfasst:
Empfangen an einem Anwendungsserver in einem IP-Multimedia-Subsystemnetz von Teilnehmerdaten, die von einem Heimatteilnehmerserver gesendet werden (1), wobei die Teilnehmerdaten Informationen enthalten, die ein Heimatregister in einem leitungsvermittelten Netz identifizieren und Anweisungen zur Bearbeitung der Teilnehmerdienstdaten;
Senden (2) einer Nachricht vom Anwendungsserver an das identifizierte Heimatregister, wobei die Nachricht wenigstens einen Teil der Anweisungen und eine Adresse des Anwendungsservers umfasst.

2. Verfahren zur Verwaltung von Teilnehmerdaten nach Anspruch 1, ferner umfassend:
Empfangen am Anwendungsserver von Teilnehmerdatenaktualisierungsinformationen, die von einem Benutzer gesendet werden; und
Aktualisieren von Teilnehmerdaten, die am Anwendungsserver gespeichert sind, mit den empfangenen Teilnehmeraktualisierungsinformationen.

3. Verfahren zur Verwaltung von Teilnehmerdaten nach Anspruch 2, wobei die Teilnehmeraktualisierungsinformationen vom Benutzer über eine Ut- oder Webschnittstelle gesendet werden.

4. Verfahren zur Verwaltung von Teilnehmerdaten nach Anspruch 2 oder 3, ferner umfassend ein Senden einer Nachricht vom Anwendungsserver an das Heimatregister, wobei die Nachricht wenigstens einen Teil der Teilnehmeraktualisierungsinformationen umfasst.

5. Verfahren zur Verwaltung von Teilnehmerdaten nach einem der vorhergehenden Ansprüche, ferner umfassend vor dem Senden der Nachricht ein Mappen der Anweisungen, die in die Nachricht an das Heimatregister aufgenommen werden sollen, in Anweisungen, die vom Heimatregister verstanden werden können.

6. Verfahren zur Verwaltung von Teilnehmerdaten nach einem der Ansprüche 1 bis 4, ferner umfassend ein Senden der Nachricht über einen Zwischenknoten, der funktionell zwischen dem Anwendungsserver und dem Heimatregister angeordnet ist, und Mappen am Zwischenknoten der empfangenen Teilnehmerdatenanweisungen in Anweisungen, die vom Heimatregister verstanden werden können.

7. Verfahren zur Verwaltung von Teilnehmerdaten nach einem der Ansprüche 1 bis 4, ferner umfassend ein Mappen am Heimatregister der Teilnehmerdatenanweisungen, die in die Nachricht enthalten sind, in Anweisungen, die vom Heimatregister verstanden werden können.

8. Verfahren zur Verwaltung von Teilnehmerdaten nach einem der vorhergehenden Ansprüche, wobei das Verfahren ein Senden als Antwort auf den Empfang der Nachricht vom Anwendungsserver am Heimatregister einer Aktualisierungsnachricht vom Heimatregister an eine Mobilvermittlungsstelle/ein Besucherregister umfasst, wobei die Aktualisierungsnachricht Anweisungen zur Bearbeitung von Teilnehmerdaten aktualisiert, die an der Mobilvermittlungsstelle/am Besucherregister gespeichert sind.

9. Verfahren zur Verwaltung von Teilnehmerdaten nach einem der Ansprüche 1 bis 7, wobei das Verfahren nach dem Empfang am Heimatregister der Nachricht vom Anwendungsserver folgende Schritte umfasst:
Empfangen am Heimatregister einer Aufenthaltsaktualisierungsnachricht von einer Mobilvermittlungsstelle/einem Besucherregister; und
Senden als Teil der Aufenthaltsaktualisierungsprozedur einer Aktualisierungsnachricht vom Heimatregister an die Mobilvermittlungsstelle/das Besucherregister, wobei die Aktualisierungsnachricht Anweisungen zur Bearbeitung von Teilnehmerdaten aktualisiert, die an der Mobilvermittlungsstelle/am Besucherregister gespeichert sind.

10. Verfahren zur Verwaltung von Teilnehmerdaten nach einem der vorhergehenden Ansprüche, wobei es sich bei den Informationen, die das Heimatregister identifizieren, um eine Adresse des Signalisierungssystems Nr. 7 handelt.

11. Verfahren zur Verwaltung von Teilnehmerdaten nach einem der Ansprüche 1 bis 9, wobei die Informationen, die das Heimatregister identifizieren, von einem von einer internationalen Mobilteilnehmerkennung und einem diensteintegrierenden digitalen Mobilstationsnetz hergeleitet sind.

12. IP-Multimedia-Subsystem-Anwendungsserver, wobei der Anwendungsserver umfasst:
einen Empfänger zum Empfangen von Teilnehmerdaten von einem Heimatteilnehmerserver, wobei die Teilnehmerdaten Informationen enthalten, die ein Heimatregister in einem leitungsvermittelten Netz und Anweisungen zur Bearbeitung von Teilnehmerdienstdaten identifizieren;
Mittel zum Erzeugen einer Nachricht, wobei die Nachricht wenigstens einen Teil der Anweisungen und eine Adresse des Anwendungsservers enthält; und
einen Sender zum Senden der Nachricht an das identifizierte Heimatregister.

## Revendications

1. Procédé de gestion de données d'abonné dans un réseau de communication, le procédé comprenant les étapes consistant à :
recevoir, au niveau d'un serveur d'application dans un réseau de sous-système multimédia IP, des données d'abonné envoyées (1) depuis un serveur HSS (Home Subscriber Server), les données d'abonné incluant des informations identifiant un registre de localisation d'origine dans un réseau à commutation de circuits et des instructions de gestion des données de service d'abonné ;
envoyer (2) un message du serveur d'application au registre de localisation d'origine identifié, le message comprenant au moins une partie dess instructions, et une adresse du serveur d'application.

2. Procédé de gestion de données d'abonné selon la revendication 1, comprenant en outre de :
recevoir, au niveau du serveur d'application, une information de mise à jour de données d'abonné envoyée depuis un utilisateur ; et
mettre à jour les données d'abonné mémorisées au niveau du serveur d'application avec l'information de mise à jour d'abonné reçue.

3. Procédé de gestion de données d'abonné selon la revendication 2, dans lequel l'information de mise à jour d'abonné est envoyée depuis l'utilisateur via une interface Web ou Ut.

4. Procédé de gestion de données d'abonné selon la revendication 2 ou 3, comprenant en outre d'envoyer un message du serveur d'application au registre de localisation d'origine, le message comprenant au moins une partie de l'information de mise à jour d'abonné.

5. Procédé de gestion de données d'abonné selon une quelconque des revendications précédentes, comprenant en outre, avant d'envoyer le message, de mettre en correspondance les instructions à inclure dans le message au registre de localisation d'origine avec des instructions qui peuvent être comprises par le registre de localisation d'origine.

6. Procédé de gestion de données d'abonné selon une quelconque des revendications 1 à 4, comprenant en outre d'envoyer le message via une fonctionnalité de noeud intermédiaire située entre le serveur d'application et le registre de localisation d'origine et, au niveau du noeud intermédiaire, de mettre en correspondance les instructions de données d'abonné reçues avec des instructions qui peuvent être comprises par le registre de localisation d'origine.

7. Procédé de gestion de données d'abonné selon une quelconque des revendications 1 à 4, comprenant en outre, au niveau du registre de localisation d'origine, de mettre en correspondance les instructions de données d'abonné contenues dans le message avec des instructions qui peuvent être comprises par le registre de localisation d'origine.

8. Procédé de gestion de données d'abonné selon une quelconque des revendications précédentes, le procédé comprenant, en réponse à la réception du message provenant du serveur d'application au niveau du registre de localisation d'origine, d'envoyer un message de mise à jour du registre de localisation d'origine à un centre de commutation pour les services mobiles/ registre de localisation visiteur, le message de mise à jour mettant à jour des instructions pour gérer des données d'abonné mémorisées au niveau du centre de commutation pour les services mobiles/ registre de localisation visiteur.

9. Procédé de gestion de données d'abonné selon une quelconque des revendications 1 à 7, le procédé comprenant de, après la réception au niveau du registre de localisation d'origine du message provenant du serveur d'application :
recevoir au niveau du registre de localisation d'origine un message de mise à jour de position provenant d'un centre de commutation pour les services mobiles/ registre de localisation visiteur ; et
comme partie de la procédure de mise à jour de position, envoyer un message de mise à jour du registre de localisation d'origine au centre de commutation pour les services mobiles/ registre de localisation visiteur, le message de mise à jour mettant à jour des instructions pour gérer des données d'abonné mémorisées au niveau du centre de commutation pour les services mobiles/ registre de localisation visiteur.

10. Procédé de gestion de données d'abonné selon une quelconque des revendications précédentes, dans lequel l'information identifiant le registre de localisation d'origine est une adresse de système de signalisation #7.

11. Procédé de gestion de données d'abonné selon une quelconque des revendications 1 à 9, dans lequel l'information identifiant le registre de localisation d'origine est déduite d'un d'une identité d'abonné mobile internationale et un réseau numérique à services intégrés de station mobile.

12. Serveur d'application de sous-système multimédia IP, le serveur d'application comprenant :
un récepteur pour recevoir des données d'abonné provenant d'un serveur HSS (Home Subscriber Server), les données d'abonné incluant des informations identifiant un registre de localisation d'origine dans un réseau à commutation de circuits et des instructions pour gérer des données de service d'abonné ;
un moyen pour générer un message, le message comprenant au moins une partie des instructions, et une adresse du serveur d'application ; et
un émetteur pour envoyer le message au registre de localisation d'origine identifié.
